# EUROPEAN PATENT SPECIFICATION

(11) **EP 3 082 402 B1**
(45) Date of publication and mention of the grant of the patent: **20.09.2017**
(21) Application number: 14828332.8
(22) Date of filing: 16.12.2014
(51) Int. Cl.: A01G 9/24

(54) **GREENHOUSE AND METHOD FOR CLIMATE CONTROL IN A GREENHOUSE**
GEWÄCHSHAUS UND VERFAHREN FÜR KLIMATISIERUNG DES GEWÄCHSHAUSES
SERRE ET PROCÉDÉ POUR CONTROLLER LA CLIMATISATION DANS UNE SERRE

(30) Priority: 16.12.2013 NL 2011966
(43) Date of publication of application: 26.10.2016
(73) Proprietor: Maurice Kassenbouw B.V., 5961 PT Horst (NL)
(72) Inventor: VOERMANS, Joseph Johannes, D-47574 Goch (DE); LA CROIS, Michel, NL-5964 PA Horst-Meterik (NL)
(74) Representative: Algemeen Octrooi- en Merkenbureau B.V.
(86) International application number: PCT/NL2014/050864
(87) International publication number: WO 2015/093943

(56) References cited:
- WO-A1-2012/169880
- WO-A2-2009/060436
- JP-A- 2005 176 721
- JP-A- 2008 144 993
- US-A1- 2013 122 800

## Description

The present invention relates to a greenhouse for cultivating plants in an interior space thereof.

The present invention further relates to a method for climate control in such a greenhouse.

NL 2006774 discloses a greenhouse comprising a plurality of cultivation gutters disposed inside the greenhouse for growing plants thereon, more specifically on substrate material provided on/in the gutters. The greenhouse further comprises an air supply system for supplying air to the interior of the greenhouse near the floor surface of the greenhouse. The air supply system comprises a plurality of air pipes, which each extend in the longitudinal direction of a respective cultivation gutter, directly under a cultivation gutter, near the floor surface of the greenhouse. WO2009060436 discloses another greenhouse with an air supply system. Although the above-described known system is satisfactory in practice, it can be further improved as regards the cooling of air in the greenhouse.

Accordingly it is an object of the present invention to provide a greenhouse comprising improved air cooling facilities.

The above object is achieved with the greenhouse according to the present invention, which comprises a first ventilation system provided with at least one first supply fan configured to supply air from outside the interior to a lower part of the interior, between the plants, and a second ventilation system for effecting an air flow through a higher part of the interior, at least substantially above the plants in use, the second ventilation system comprising supply means configured to supply air from outside the interior to the higher part of the interior as well as exhaust means disposed spaced from the supply means, which are configured to exhaust air from the air flow from the higher part of the interior, wherein the supply means and the exhaust means each comprise at least one supply fan and at least one exhaust fan, respectively, for supplying air to the higher part of the interior and exhausting air therefrom.

Within the scope of the present invention, the phrases "a lower part" and "a higher part" are understood to refer to, respectively, the space below and between the plants and the space above the level of the plant tops of the plants present in the interior. Usually, this level substantially corresponds to the centre of the interior, seen in the height direction of the greenhouse.

An advantage of the greenhouse according to the present invention is that by using the aforesaid second ventilation system an additional air flow through the interior is realised, in a higher part thereof, making it possible to maintain a more stable air flow in the lower part of the greenhouse below the plant tops. In addition, this makes it possible to select an advantageous capacity of the fans, such that a highly efficient ventilation of the interior can be realised under various circumstances regarding, for example, the temperature and the air humidity in the interior in relation to the outside environment. Installing the two separate ventilation systems makes it possible to force a separation in the layers of air in the greenhouse. The first ventilation system constantly supplies air from outside the interior and is thus capable of controlling the climate in the lower part separately from the conditions in the higher part. When the radiation from the sun causes the temperature in the greenhouse to run up, the influence of the layer of air in the higher part on the layer of air in the lower part will be even smaller as a result of the natural movement of heat rising up. This excess heat can be dissipated by using the atomisers. The layer of air in the higher part cannot affect the layer of air in the lower part, or at least only to a minor extent, because air from outside is constantly supplied to the higher part. According to the invention, two air flows that can to a high degree be controlled independently of each other are thus created in the greenhouse.

The capacity or, in other words, the maximum flow of the at least one first supply fan, of the first ventilation system is preferably smaller, preferably between two and three times smaller, than the flow of the at least one supply and exhaust fan of the second ventilation system. Using the invention, an overpressure can be realised in the greenhouse in a simple manner, which is very advantageous, by arranging for the added flow of all the supply fans or, in other words, those of the first and the second ventilation system, to be larger than the flow of the at least one exhaust fan of the second ventilation system.

Alternatively it is advantageous if the exhaust means comprise at least one exhaust fan for exhausting air from the interior, wherein the supply means are formed by a passage, such as a flap or window that can be opened and closed, in a wall and/or a roof of the greenhouse. Exhausting air from the interior by means of an exhaust fan leads to relatively little disturbance, for example in the form of swirls, in the air flow. Accordingly, the invention alternatively relates to a greenhouse comprising a first ventilation system with at least one first supply fan configured to supply air from outside the interior to a lower part of the interior, between the plants, and a second ventilation system for effecting an air flow through a higher part of the interior, at least substantially above the plants in use, the second ventilation system comprising supply means configured to supply air from outside the interior to the higher part of the interior and exhaust means disposed spaced from the supply means, which are configured to exhaust air from the air flow from the higher part of the interior, wherein at least one of the supply means and the exhaust means comprises at least one fan for supplying air to and exhausting air from, respectively, the higher part of the interior. The exhaust means preferably comprise at least one exhaust fan in that case.

The greenhouse according to the invention comprises a multitude of atomisers provided in the higher part of the interior, which atomisers are each configured to atomise a liquid in air of the air flow effected in the higher part of the interior by the second ventilation system. By humidifying air in the air flow in the higher part of the interior of the greenhouse, above the plant tops, by atomising liquid, preferably water, a considerable increase of the cooling capacity is realised. As a result, the air does not heat up, at least only to a minimum extent, or even cools down slightly, as it flows through the higher part of the interior above the plant tops. Thus a climate system by means of which the temperature in the interior of the greenhouse can be controlled to a high degree is realised in a simple and very efficient manner. An additional result of this is that the at least one fan of the second ventilation system can have a lower capacity.

It is advantageous in that regard, in connection with an even distribution of the cooling capacity, if the interior has a length, in the longitudinal direction, and a width transversely to the length, wherein the at least one exhaust and supply fan, respectively, in fact consists of a multitude of fans provided in the higher part of the interior, distributed over the width thereof, furthermore preferably with a spacing of about 6-12 metres therebetween, at the location of a wall of the greenhouse that surrounds the interior, for effecting the air flow in the longitudinal direction over the width of the interior.

The at least one exhaust fan preferably consists of a multitude of exhaust fans provided in the higher part, distributed over the width thereof, at the location of a further wall, other than the wall provided with the multitude of supply fans, of the greenhouse that surrounds the interior.

It is also advantageous if the atomisers of the multitude of atomisers are distributed, preferably evenly and in a grid pattern, over the higher part of the interior. Preferably, the atomisers are thus distributed both over the length and the width. An advantageous spacing between two adjacent atomisers, both in longitudinal direction and in transverse direction, ranges between 10 and 30 metres.

It is furthermore advantageous if the greenhouse comprises a heat transfer element through which supply air drawn in from outside the interior by the at least one first supply fan flows in use and through which air exhausted from the higher part of the interior by the exhaust means flows in use, separately from the supply air, wherein the heat transfer element is configured so that heat can be exchanged between the supply air and the exhaust air.

It is furthermore advantageous if the interior of the greenhouse comprises cultivation gutters for growing plants thereon, which cultivation gutters preferably extend in the longitudinal direction.

The first ventilation system preferably comprises a number of air pipes extending in the longitudinal direction near the floor surface of the interior, which air pipes are connected to the at least one first supply fan and which are provided with longitudinally spaced openings in a wall thereof for supplying air to the lower part of the interior distributed over the longitudinal direction thereof. The air pipes preferably extend between rows of plants, which plants may or may not be provided on cultivation gutters.

It is moreover advantageous if the supply means comprise at least one supply fan at the location of a first wall of the greenhouse and at the location of the second, opposite further wall of the greenhouse, wherein the exhaust means comprise at least one exhaust fan provided centrally between the wall and the opposite further wall for exhausting air from the higher part of the interior through a roof of the greenhouse.

The invention further relates to a method for climate control in a greenhouse according to the invention, comprising the steps of:
a) supplying air from outside the interior to the lower part of the interior by means of the first ventilation system,
b) effecting the air flow through the higher part of the interior by means of the second ventilation system.

Advantages of the method according to the present invention are analogous to the above-described advantages of the greenhouse according to the present invention.

By effecting an air flow through the higher part in addition to supplying air to the lower part of the interior an increased cooling capacity can be achieved. According to the invention, steps a) and b) are carried out simultaneously, therefore.

In one embodiment, the second ventilation system comprises detection means for detecting a temperature in at least the higher part of the interior, and preferably also a temperature outside the interior. Preferably, step b) is carried out, preferably automatically, when the temperature detected by the detection means exceeds a predetermined threshold value.

Preferably, the method further comprises the steps of c) atomising a liquid in air of the air flow through the higher part of the interior by means of the multitude of atomisers. This atomising step is preferably carried out when the detection means detect that the temperature in the interior of the greenhouse exceeds the threshold value, or preferably a further, higher threshold value, and/or if the temperature in the interior is lower than the ambient temperature. In other words, in such a case it is not possible to realise an adequate cooling effect merely by generating the air flow through the higher part. Evaporation of the atomised liquid causes heat to be extracted from the air, making it possible to realise a cooling effect in the interior. The atomising step can also be carried out if an air flow speed exceeds a desired threshold value. That is, instead of further increasing the flow rate of a fan, liquid is atomised so as to nevertheless realise an additional cooling effect in this way.

The greenhouse may comprise control means for automatic activation and deactivation of the first and the second ventilation system and for automatic activation of the multitude of atomisers, preferably when the detection means detect that the temperature in the interior of the greenhouse, in particular in the higher part thereof, exceeds the threshold value and/or is lower than the ambient temperature.

It is advantageous if the air flow is effected in the longitudinal direction, distributed over the width of the interior, during step a), wherein liquid is atomised in air of the air flow, distributed over the interior, by means of the multitude of atomisers during step c).

The present invention will be explained in more detail hereinafter by means of the description of preferred embodiments of a greenhouse according to the invention with reference to the following schematic figures, in which:
Figure 1 is a three-dimensional view of a preferred embodiment of a part of a greenhouse according to the present invention;
Figure 2 is a sectional view along the line II-II in figure 1;
Figure 3 is a three-dimensional outside view of a part of the greenhouse of figure 2; and
Figures 4 and 5 are sectional views analogous to the sectional view of figure 2 of two further preferred embodiments of a greenhouse according to the invention.

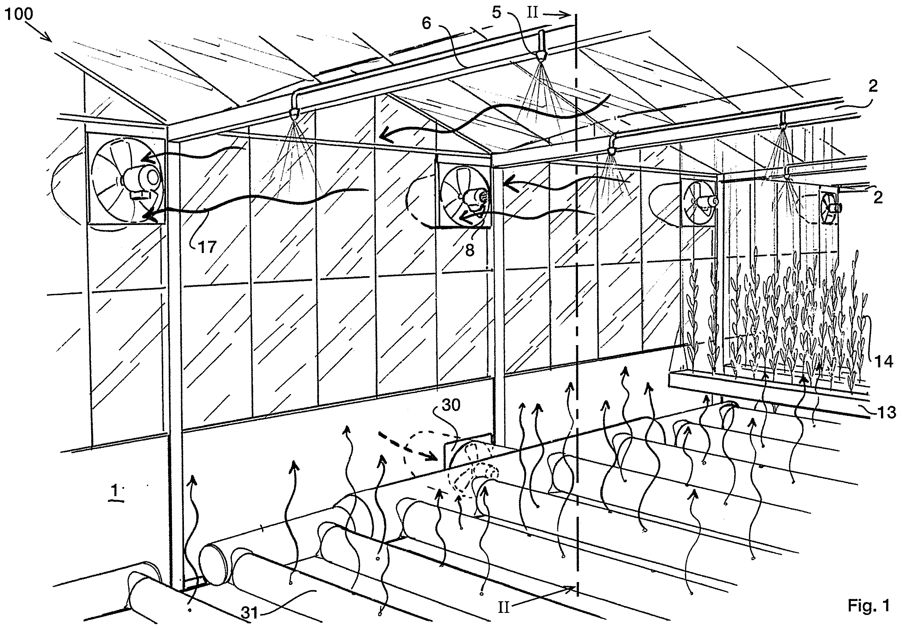

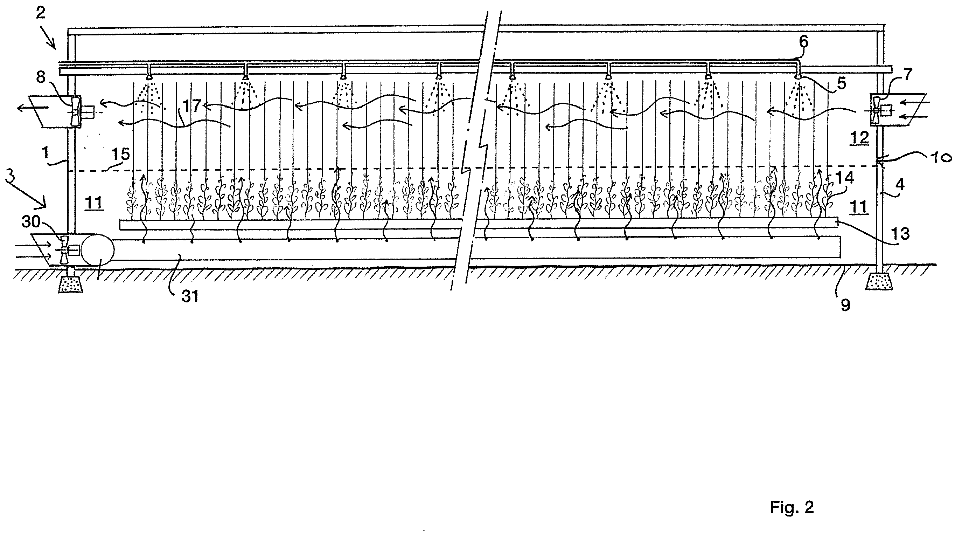

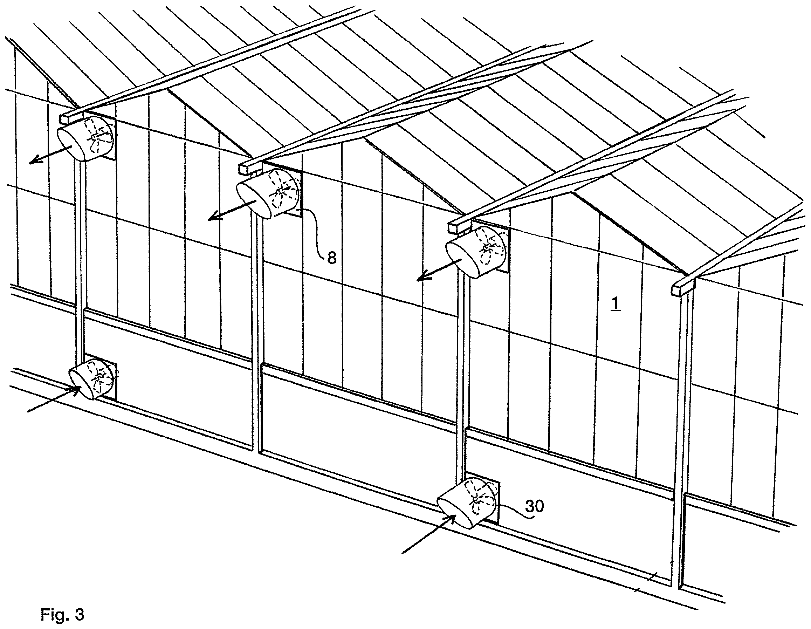

The preferred embodiment of a greenhouse 100 according to the invention, which is shown in partial view in figure 1, in sectional view in figure 2 and in figure 3, has a roof construction 2, a first end wall 1, a second, opposite end wall 4 and a floor surface 9. Side walls transversely to the walls 1 and 4 are not shown in the figures. The whole of the aforesaid walls surrounds an interior 10 of the greenhouse 100. A first ventilation system 3 is provided in the interior 10 of the greenhouse 100, by means of which air is supplied to the lower part 11 below the plant tops of the interior 10 of the greenhouse 100. The first ventilation system 3 has a supply fan 30, which is connected to a number of air pipes 31 extending in the longitudinal direction, near a floor surface 9 of the interior 10, which air pipes are connected to the supply fan and which are provided with openings in the circumferential wall, distributed over the length of each of the pipes 31, for supplying air between the plants 14 in the lower part 11 of the interior 10, distributed over the length thereof.

Cultivation gutters 13 are provided in the interior 10, on which plants 14 can grow. The cultivation gutters 13 are placed in the longitudinal direction of the interior 10, in the lower part 11 thereof, in the space above the air pipes 31 of the air supply system 3.

A number of atomisers 5 are furthermore provided in a higher part 12 of the interior 10 of the greenhouse. The higher part 12 is defined as the part of the interior 10 above the plant tops. In figure 2 a dashed line 15 indicates the level in the interior 10 above which the higher part 12 is located and below which the lower part 11 is located. The atomisers 5 are connected to a liquid supply line 6 in the form of a water conduit. A greenhouse 100 to which the invention relates has a length of a few hundred metres and a width of about 100 m. The atomisers 5 are arranged in a grid-like pattern, spaced 20 m apart both in longitudinal direction and in transverse direction.

In the greenhouse 100, a second ventilation system is provided, by means of which the temperature in the interior 10 of the greenhouse 100, more specifically in the higher part 12 thereof, can be influenced. The second climate system for that purpose comprises supply fans 7 provided at the top of the end wall 4 for supplying air from outside the interior 10, for example from outside the greenhouse 100, to the interior 10 for effecting an air flow, schematically indicated by arrows 17, through the higher part 12 of the interior 10 of the greenhouse 100. The supply fans 7 are provided on the wall 4 with a spacing of about 4 m between them, seen in transverse direction. The second ventilation system further comprises a number of exhaust fans 8 on the opposite end wall 1 for exhausting air from the higher part 12 above the plant tops of the interior 10. The exhaust fans 8 are provided on the wall 1 with a spacing of about 4 m between them, seen in transverse direction. This makes it possible to achieve an even distribution of the cooling capacity, seen across the width of the greenhouse 100. The atomisers 5 are configured to humidify air in the air flow 17 in use, by atomising water into the air flow 17 through the higher part 12 of the interior 10, past the atomisers 5, which is effected by means of the supply fans 7 and the exhaust fans 8.

The outside view of a greenhouse of figure 3 shows the exhaust fans 8 installed in the side wall 1. The exhaust fans 8 are preferably spaced 4 - 10 m apart.

In this way a greenhouse is provided, in the interior of which the climate, in particular the temperature, can to a high degree be controlled, without the necessity to open ventilating windows for ventilating the greenhouse so as to introduce generally cooler ambient air into the interior of the greenhouse. This does not exclude the possibility of combining the use of the climate system according to the present invention with the opening of ventilating windows and/or the use of an additional humidifier or dehumidifier, however. Because such ventilation is thus not needed, or at least to a significantly lesser extent, the carbon dioxide content in the interior of the greenhouse is to a higher degree maintained, as is the temperature, so that, for example, a saving as regards the forced addition of carbon dioxide to air in the interior of the greenhouse can be realised as well.

In a preferred embodiment of a method for climate control in the greenhouse 100, the following steps are carried out:
Air is supplied from outside the interior 10 to the higher part 12 of the interior 10 by means of the supply fans 7. Air is furthermore exhausted from the higher part 12 of the interior 10 by means of the exhaust fans 8. In addition, air is introduced into the lower part 11 of the interior by means of the first ventilation system 3. By effecting an air flow through the higher part of the interior in addition to supplying air to the lower part, an increased cooling capacity can be achieved if the ambient temperature is lower than the temperature in the interior 10.

The second ventilation system may comprise detection means for detecting a temperature in the higher part and a temperature outside the interior 10. If it is determined by the detection means that the temperature in the interior 10 of the greenhouse 100 is lower than the ambient temperature, water is introduced into air of the air flow through the higher part of the interior 10 by means of the multitude of atomisers 5. Evaporation of the atomised water causes heat to be extracted from the air, making it possible to realise a stronger cooling effect in the interior. Said increased cooling capacity makes it possible to reduce the flow rate of the air flow whilst the atomisers 5 are in operation in a situation in which plants that are sensitive to air flow are present in the interior 10.

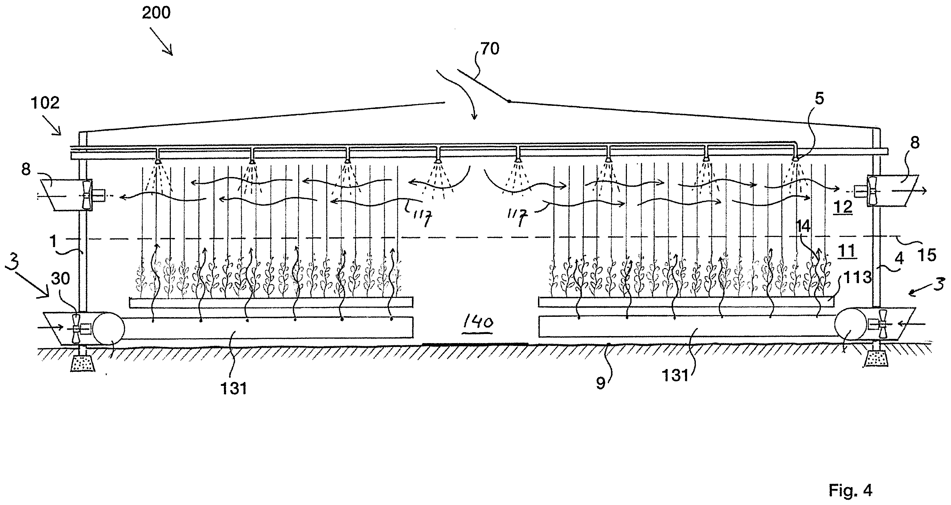

Another preferred embodiment of a greenhouse 200 according to the invention, which is shown in cross-sectional view in figure 4, has a roof construction 102 which is higher in the central part of the greenhouse 200 than near the end walls 1 and 4. This sloping roof construction 102 results in a flow of warm air to the central, higher part of the interior 10. This sloping roof construction 102 leads to a flow of warm air to the central, higher part of the interior 10. In the interior 10 of the greenhouse 200, a central passage 140 in the form of a central aisle is provided, with a first ventilation system 3 and cultivation gutters 113 present on both sides thereof, analogously to the previously described greenhouse 100. The second ventilation system comprises exhaust fans 8 both in the end wall 1 and in the opposite end wall 4. Passages 70 such as flaps or windows which can be opened and closed are provided in the roof construction 102, in the central part of the greenhouse 200, for supplying air for the second ventilation system. The operation of opening and closing these passages 70 is automated so as to make it possible to control the desired climate in the interior 10. As an alternative to these passages 70, supply fans can be used for supplying air. Flaps or windows which can be opened or closed can be used as an alternative to the exhaust fans 8 in that case. Furthermore, a number of atomisers 5 are provided in a higher part 12 of the interior 10 in greenhouse 200, analogously to the greenhouse 100, for humidifying air in the air flow 117 in use.

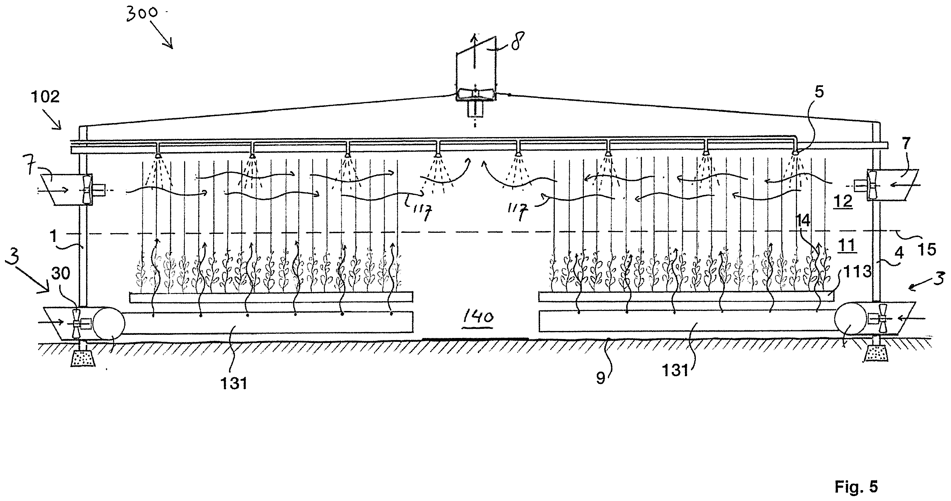

In another preferred embodiment of a greenhouse 300 according to the invention as shown in figure 5, which is comparable to the greenhouse 200, the second ventilation system comprises supply fans 7 instead of exhaust fans 8 both in the end wall 1 and in the opposite end wall 4. Exhaust fans 8 for exhausting air, for the second ventilation system, are provided in the roof construction 102 for the exhaustion of air from the interior. As an alternative to the exhaust fans 8, passages 70 such as flaps or windows which can be opened and closed may be provided in the central part of the greenhouse 200, which passages in this case function to exhaust air from the interior. Thus, an air flow in reverse direction in comparison with the greenhouse 200 as described above is effected in the higher part.

In a preferred embodiment of a method for climate control in the greenhouse 200 as shown in figure 4, the following steps are carried out:
Via the passages 70, air from outside the interior 10 can flow into the higher part 12 of the interior 10. Air is exhausted from the higher part 12 of the interior by means of the exhaust fans 8, thereby effecting an air flow through the higher part. Further steps take place analogously to the previously described method. The analogy applies as regards the greenhouse 300, albeit with supply fans 7 and exhaust fans 8 in this case.

In another preferred embodiment of a greenhouse according to the invention, which largely corresponds to the greenhouse 200, the supply of air for the second ventilation system is provided by supply means both in the end wall 1 and in the opposite end wall 4, which supply means may consist of flaps or windows, for example. The exhaustion of air from the second ventilation system takes place by means of passages 70 provided with exhaust means such as fans, for example, or, if the supply means comprise fans, possibly by means of flaps or windows. Thus, an air flow in reverse direction in comparison with the greenhouse 200 as described above is effected in the higher part.

## Claims

1. A greenhouse (100) for cultivating plants (14) in an interior space (10) thereof, comprising a first ventilation system (3) provided with at least one first supply fan (30) configured to supply air to a lower part of the interior, (10) between the plants (14), and a second ventilation system for effecting an air flow through a higher part (12) of the interior (10), at least substantially above the plants (14) in use, the second ventilation system comprising supply means configured to supply air from outside the interior (10) to the higher part (12) of the interior (10) as well as exhaust means disposed spaced from the supply means, which are configured to exhaust air from the air flow from the higher part (12) of the interior, wherein the supply means and the exhaust means each comprise at least one supply fan (7) and at least one exhaust fan (8) respectively, for supplying air to the higher part (12) of the interior (10) and exhausting air therefrom, **characterised in that** the first supply fan (30) is configured to supply air from outside the interior and the greenhouse (100) further comprising a multitude of atomisers (5) provided in the higher part (12) of the interior (10), which atomisers (5) are each configured to atomise a liquid in air of the air flow effected in the higher part (12) of the interior (10) by the second ventilation system.

2. A greenhouse (100) according to claim 1, wherein the interior has a length, in the longitudinal direction, and a width transversely to the length, wherein the at least one exhaust and supply fan, respectively, in fact consists of a multitude of fans provided in the higher part of the interior, distributed over the width thereof, at the location of a wall of the greenhouse that surrounds the interior, for effecting the air flow in the longitudinal direction over the width of the interior.

3. A greenhouse (100) according to either one of the preceding claims, wherein the atomisers (5) of the multitude of atomisers are distributed, preferably in a grid pattern, over the higher part of the interior.

4. A greenhouse (100) according to any one of the preceding claims, comprising a heat transfer element through which supply air drawn in from outside the interior by the at least one first supply fan flows in use and through which air exhausted from the higher part of the interior by the exhaust means flows in use, separately from the supply air, wherein the heat transfer element is configured so that heat can be exchanged between the supply air and the exhaust air.

5. A greenhouse (100) according to any one of the preceding claims, **characterised in that** the interior of the greenhouse comprises cultivation gutters for growing plants thereon, which cultivation gutters preferably extend in the longitudinal direction.

6. A greenhouse (100) according to any one of the preceding claims, wherein the first ventilation system comprises a number of air pipes extending in the longitudinal direction near a floor surface of the interior, which air pipes are connected to the at least one first supply fan and which are provided with longitudinally spaced openings in a wall thereof for supplying air to the lower part of the interior, distributed over the longitudinal direction thereof.

7. A greenhouse (100) according to any one of the preceding claims, wherein the supply means comprise at least one supply fan at the location of a first wall of the greenhouse and at the location of the second, opposite further wall of the greenhouse, wherein the exhaust means comprise at least one exhaust fan provided centrally between the wall and the opposite further wall for exhausting air from the higher part of the interior through a roof of the greenhouse.

8. A method for climate control in a greenhouse (100) according to any one of the preceding claims 1 - 7, comprising the steps of:
a) supplying air from outside the interior (10) to the lower part (11) of the interior by means of the first ventilation system (3),
b) effecting the air flow through the higher part (12) of the interior (10) by means of the second ventilation system.

9. A method according to claim 8, wherein the second ventilation system comprises detection means for detecting a temperature in at least the higher part of the interior, and preferably also a temperature outside the interior, wherein step b) is carried out when the temperature detected by the detection means exceeds a predetermined threshold value.

10. A method according to claim 8 or 9, further comprising the step of
c) atomising a liquid in air of the air flow through the higher part of the interior by means of the multitude of atomisers (5).

## Patentansprüche

1. Gewächshaus (100) zum Kultivieren von Pflanzen (14) in einem Innenraum (10) davon,
umfassend ein erstes Belüftungssystem (3), das mit mindestens einem ersten Zuführungsventilator (30) versehen ist, der
dazu konfiguriert ist, Luft zu einem unteren Teil des Innenraumes (10) zwischen den Pflanzen (14) zuzuführen,
und ein zweites Belüftungssystem zum Erzeugen eines Luftstromes durch einen höheren Teil (12) des Innenraumes (10),
beim Gebrauch mindestens im Wesentlichen über den Pflanzen (14), wobei das zweite Belüftungssystem ein Zuführungsmittel umfasst, das dazu konfiguriert ist, Luft von außerhalb des Innenraumes (10) zu dem höheren Teil (12) des Innenraumes (10) zuzuführen, sowie ein Abführungsmittel, das von dem Zuführungsmittel beabstandet angeordnet ist, welches dazu ausgestaltet ist, die Luft von dem Luftstrom von dem höheren Teil (12) des Innenraumes abzuführen, wobei das Zuführungsmittel und das Abführungsmittel jeweils mindestens einen Zuführungsventilator (7) und jeweils mindestens einen Abführungsventilator (8) umfassen, jeweils zum Zuführen von Luft zu dem höheren Teil (12) des Innenraumes (10) und zum Abführen von Luft davon, **dadurch gekennzeichnet, dass** der erste Zuführungsventilator (30) zum Zuführen von Luft von außerhalb des Innenraumes ausgestaltet ist, und das Gewächshaus (100) des Weiteren eine Vielzahl von Zerstäubern (5) umfasst, die in dem höheren Teil (12) des Innenraumes (10) zur Verfügung gestellt sind, wobei die Zerstäuber (5) jeweils dazu ausgestaltet sind, eine Flüssigkeit in die Luft des Luftstromes zu zerstäuben, der in dem höheren Teil (12) des Innenraumes (10) durch das zweite Belüftungssystem erzeugt wird.

2. Gewächshaus (100) nach Anspruch 1, wobei der Innenraum eine Länge in die Längsrichtung und eine Breite quer zu der Länge hat, wobei der mindestens eine Abführungs- und Zuführungsventilator jeweils tatsächlich aus einer Vielzahl von Ventilatoren besteht, die in dem höheren Teil des Innenraumes vorgesehen sind, verteilt über die Breite davon an der Stelle einer Wand des Gewächshauses, die den Innenraum umgibt, zum Erzeugen des Luftstromes in die Längsrichtung über die Breite des Innenraumes.

3. Gewächshaus (100) nach irgendeinem der vorhergehenden Ansprüche,
wobei die Zerstäuber (5) der Vielzahl von Zerstäubern über den höheren Teil des Innenraumes vorzugsweise in einem Gittermuster verteilt sind.

4. Gewächshaus (100) nach irgendeinem der vorhergehenden Ansprüche,
umfassend ein Wärmeübertragungselement, durch welches Zuführungsluft, die von außerhalb des Innenraumes angesaugt wird, beim Gebrauch durch den mindestens einen ersten Zuführungsventilator strömt und durch welches Luft, die von dem höheren Teil des Innenraumes abgeführt wird, beim Gebrauch durch die Abführungsmittel getrennt von der Zuführungsluft strömt, wobei das Wärmeübertragungselement dergestalt ausgestaltet ist, dass Wärme zwischen der Zuführungsluft und der Abführungsluft ausgetauscht werden kann.

5. Gewächshaus nach irgendeinem der vorhergehenden Ansprüche, **dadurch gekennzeichnet, dass** der Innenraum des Gewächshauses Kultivierungsrinnen zum Wachsen der Pflanzen darin umfasst, wobei sich die Kultivierungsrinnen vorzugsweise in die Längsrichtung erstrecken.

6. Gewächshaus (100) nach irgendeinem der vorhergehenden Ansprüche, wobei
das erste Belüftungssystem eine Anzahl an Luftrohren umfasst, die sich in die Längsrichtung in der Nähe einer Fußbodenoberfläche des Innenraumes erstrecken, wobei die Luftrohre mit dem mindestens einen Zuführungsventilator verbunden sind, und welche mit länglichen beabstandeten Öffnungen in einer Wand davon zum Zuführen von Luft zu dem unteren Teil des Innenraumes, verteilt über die Längsrichtung davon versehen sind.

7. Gewächshaus (100) nach irgendeinem der vorhergehenden Ansprüche, wobei
die Zuführungsmittel mindestens einen Zuführungsventilator an der Stelle einer ersten Wand des Gewächshauses und an der Stelle der zweiten gegenüberliegenden weiteren Wand des Gewächshauses umfassen, wobei die Abführungsmittel mindestens einen Abführungsventilator umfassen, der zentral zwischen der Wand und der gegenüberliegenden weiteren Wand zum Abführen von Luft von dem höheren Teil des Innenraumes durch ein Dach des Gewächshauses hindurch zur Verfügung gestellt ist.

8. Verfahren zur Klimasteuerung in einem Gewächshaus (100) nach irgendeinem der vorhergehenden Ansprüche 1 bis 7, das die folgenden Schritte umfasst:
a) Zuführen von Luft von außerhalb des Innenraumes (10) zu dem unteren Teil (11) des Innenraumes mittels des ersten Belüftungssystems (3),
b) Erzeugen des Luftstromes durch den höheren Teil (12) des Innenraumes (10) mittels des zweiten Belüftungssystems.

9. Verfahren nach Anspruch 8, wobei das zweite Belüftungssystem Detektierungsmittel zum Detektieren einer Temperatur in mindestens dem höheren Teil des Innenraumes und vorzugsweise auch einer Temperatur außerhalb des Innenraumes umfasst, wobei Schritt b) ausgeführt wird, wenn die Temperatur, die durch die Detektierungsmittel detektiert wird, einen zuvor festgelegten Schwellenwert überschreitet.

10. Verfahren nach Anspruch 8, oder 9, das des Weiteren den Schritt umfasst,
c) Zerstäuben einer Flüssigkeit in der Luft des Luftstromes durch den höheren Teil des Innenraumes hindurch mittels der Vielzahl von Zerstäubern (5).

## Revendications

1. Serre (100) pour cultiver des plantes (14) dans un espace intérieur (10) de celle-ci, comprenant un premier système de ventilation (3) pourvu d'au moins un premier ventilateur d'alimentation (30) configuré pour fournir de l'air à une partie inférieure de la partie intérieure (10) entre les plantes (14), et un deuxième système de ventilation pour effectuer un écoulement d'air à travers une partie supérieure (12) de la partie intérieure (10), au moins sensiblement au-dessus des plantes (14) lors de l'utilisation, le deuxième système de ventilation comprenant des moyens d'alimentation configurés pour fournir de l'air de l'extérieur de la partie intérieure (10) à la partie supérieure (12) de la partie intérieure (10) ainsi que des moyens d'évacuation disposés de manière à être espacés des moyens d'alimentation, qui sont configurés pour évacuer l'air provenant de l'écoulement d'air de la partie supérieure (12) de la partie intérieure, où les moyens d'alimentation et les moyens d'évacuation comprennent chacun au moins un ventilateur d'alimentation (7) et au moins un ventilateur d'évacuation (8), respectivement, pour fournir de l'air à la partie supérieure (12) de la partie intérieure (10) et pour évacuer l'air de celle-ci, **caractérisée en ce que** le premier ventilateur d'alimentation (30) est configuré pour fournir de l'air de l'extérieur de la partie intérieure et la serre (100) comprenant en outre une multitude de pulvérisateurs (5) prévus dans la partie supérieure (12) de la partie intérieure (10), lesquels pulvérisateurs (5) sont configurés chacun pour pulvériser un liquide dans l'air de l'écoulement d'air effectué dans la partie supérieure (12) de la partie intérieure (10) par le deuxième système de ventilation.

2. Serre (100) selon la revendication 1, dans laquelle la partie intérieure a une longueur, dans la direction longitudinale, et une largeur transversale à la longueur, où les au moins ventilateurs d'évacuation et d'alimentation, respectivement, sont en fait constitués d'une multitude de ventilateurs prévus dans la partie supérieure de la partie intérieure, répartis sur la largeur de celle-ci, à l'emplacement d'une paroi de la serre qui entoure la partie intérieure, pour effectuer l'écoulement d'air dans la direction longitudinale sur la largeur de la partie intérieure.

3. Serre (100) selon l'une quelconque des revendications précédentes, dans laquelle les pulvérisateurs (5) de la multitude de pulvérisateurs sont répartis, de préférence selon une distribution en grille, sur la partie supérieure de la partie intérieure.

4. Serre (100) selon l'une quelconque des revendications précédentes, comprenant un élément de transfert de chaleur à travers lequel l'air d'alimentation aspiré de l'extérieur de la partie intérieure par l'au moins un premier ventilateur d'alimentation s'écoule lors de l'utilisation et à travers lequel l'air évacué de la partie supérieure de la partie intérieure par les moyens d'évacuation s'écoule lors de l'utilisation, séparément de l'air d'alimentation, où l'élément de transfert de chaleur est configuré de sorte que de la chaleur puisse être échangée entre l'air d'alimentation et l'air d'évacuation.

5. Serre (100) selon l'une quelconque des revendications précédentes, **caractérisée en ce que** la partie intérieure de la serre comprend des gouttières de culture pour faire pousser des plantes sur celles-ci, lesquelles gouttières de culture s'étendent de préférence dans la direction longitudinale.

6. Serre (100) selon l'une quelconque des revendications précédentes, dans laquelle le premier système de ventilation comprend un certain nombre de conduites d'air s'étendant dans la direction longitudinale près d'une surface de sol de la partie intérieure, lesquelles conduites d'air sont reliées à l'au moins un premier ventilateur d'alimentation et sont pourvues d'ouvertures espacées longitudinalement dans une paroi de celles-ci pour fournir de l'air à la partie inférieure de la partie intérieure, réparties sur la direction longitudinale de celle-ci.

7. Serre (100) selon l'une quelconque des revendications précédentes, dans laquelle les moyens d'alimentation comprennent au moins un ventilateur d'alimentation à l'emplacement d'une première paroi de la serre et à l'emplacement de la deuxième paroi supplémentaire opposée de la serre, où les moyens d'évacuation comprennent au moins un ventilateur d'évacuation prévu au centre entre la paroi et la paroi supplémentaire opposée pour évacuer l'air de la partie supérieure de la partie intérieure à travers un toit de la serre.

8. Procédé de régulation climatique dans une serre (100) selon l'une quelconque des revendications précédentes 1 à 7, comprenant les étapes qui consistent :
a) à fournir de l'air de l'extérieur de la partie intérieure (10) à la partie inférieure (11) de la partie intérieure au moyen du premier système de ventilation (3),
b) à effectuer l'écoulement d'air à travers la partie supérieure (12) de la partie intérieure (10) au moyen du deuxième système de ventilation.

9. Procédé selon la revendication 8, dans lequel le deuxième système de ventilation comprend des moyens de détection pour détecter une température dans au moins la partie supérieure de la partie intérieure, et de préférence également une température à l'extérieur de la partie intérieure, où l'étape b) est réalisée lorsque la température détectée par les moyens de détection dépasse une valeur seuil prédéterminée.

10. Procédé selon la revendication 8 ou 9, comprenant en outre l'étape qui consiste :
c) à pulvériser un liquide dans l'air de l'écoulement d'air à travers la partie supérieure de la partie intérieure au moyen de la multitude de pulvérisateurs (5).
